# EUROPEAN PATENT APPLICATION

(11) **EP 2 395 252 A1**
(43) Date of publication of application: **14.12.2011**
(21) Application number: 11168576.4
(22) Date of filing: 02.06.2011
(51) Int. Cl.: F16B 31/06

(54) **Connecting arrangement and method for fastening a bolt**

(30) Priority: 10.06.2010 US 797856
(71) Applicant: General Electric Company, Schenectady, NY 12345 (US)
(72) Inventor: Heide, Denis, 48157 Münster (DE)
(74) Representative: Bedford, Grant Richard

(57) **Abstract**

A connecting arrangement is provided. The connecting arrangement comprises a bolt (120) with a fastening portion (121), which has one or more grooves (122); a intermediate element (130) with one or more convex cuts (133) on the inner side of the intermediate element and a thread on the outer side of the intermediate component, wherein the one or more convex cuts are adapted for fitting with the one or more grooves of the fastening portion of the bolt; and a fastener (140)having a thread on the inner side and being adapted for fastening the intermediate component.

## Description

The present application relates generally to a connecting arrangement and a method of fastening a bolt. More specifically, the present application relates to a connecting arrangement and a connecting system with improved fatigue resistance and to a method for fastening a bolt with improved fatigue resistance.

Fastening connections often use form closure in order to provide a tight connection between two or more different parts. Such fastening connections can be provided by screws, nails, bolts, rivets or the like. The function of these connections is to ensure a secured or fixed fitting of the connected parts and to transmit forces that are applied to the connected parts.

Especially screw connections are a common and popular manner to provide a good connection result at a minimum of costs. Therefore, screws are available for almost every connection of technical interest. For instance, flange connections are screwed in order to connect two approximately round components.

Typically, the screws have to provide a good and secure function in order to avoid any damage from separated components. Especially in very large applications, such as wind energy systems, the screw connection has to meet high security demands. The flange connections of wind energy systems are also screwed and the required strength is achieved by using large screws. Due to the construction and the material, which may be exposed to high loads, there is always a remaining risk for these connections. Furthermore, the dimensioning of the screws is in any technical case a compromise between security and costs.

In view of the above, a connecting arrangement, a connecting system and a method of fastening a bolt are provided.

According to a first aspect of the present application, a connecting arrangement is provided. The connecting arrangement includes a bolt with a fastening portion having one or more grooves, whose circumference is differentiable between at least two portions; an intermediate element with one or more convex cuts on the inner side of the intermediate element and a thread on the outer side of the intermediate component, wherein the one or more convex cuts are adapted for fitting with the one or more grooves of the fastening portion of the bolt; and a fastener having a thread on the inner side, wherein the fastener is adapted for being screwed on the intermediate component.

According to another aspect of the present application, a connecting system is provided. The connecting system includes a bolt with a fastening portion at one end thereof adapted for fitting with a intermediate component, wherein the fastening portion has one or more grooves adapted for providing a stress-relieved geometry; a clamp component adapted for clamping the bolt, wherein the clamp component has one or more protrusions on the inner side of the clamp component and a thread on the outer side of the clamp component, wherein the one or more protrusions are adapted for fitting with the one or more grooves of the fastening portion of the bolt; and a nut having a thread on the inner side, wherein the nut is adapted for being screwed on the clamp component by fitting with the thread on the outer side of the clamp component so that a form closure between the clamp component and the fastening portion of the bolt is provided.

According to yet another aspect of the present application, a method for fastening a bolt is provided. The method includes providing a bolt with at least one fastening portion having one or more grooves; surrounding the bolt with a intermediate component having a thread on the outer side and one or more convex cuts on the inner side, so that the one or more convex cuts of the intermediate component fit with the one or more grooves of the bolt; fastening the bolt and the intermediate element with a fastener having a thread on the inner side, which fits with the thread on the outer side of the intermediate element, so that the intermediate element and the fastening portion of the bolt provide a form closure.

Various aspects, advantages and features of the present invention are apparent from the dependent claims, the description and the accompanying drawings, in which:
Fig. 1 shows a schematic, exploded view of a connecting arrangement according to embodiments described herein;
Fig. 2 shows a schematic top view of the intermediate element according to embodiments described herein;
Fig. 3 shows a schematic view of a mounted connecting arrangement according to embodiments described herein;
Fig. 4a shows a schematic view of a mounted connecting arrangement according to other embodiments described herein;
Fig. 4b shows a schematic, more detailed view of the geometry of a groove of a bolt according to some embodiments described herein; and,
Fig. 5 shows a schematic flowchart of a method of fastening a bolt according to embodiments described herein.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

The strength of a screw connection depends on different conditions. Among these conditions, there are material, size, order of assembly, load, location etc. Due to the geometry of the screw, screws allow on the one hand for a tight connection and on the other hand may cause notch stress. The notch stress appears in devices with a notched geometry. Notches with a sharp change in geometry (such as threads and the like) cause stress peaks in a device, when the device is stressed by tension, bending, torsion, and/or shear. These stress peaks reduce the strength of the device and may shorten the life time.

The notch stress may constitute a weak point of a screw-nut connection. With the addition of further factors, such as material weakness, the notch stress may have severe consequences. Therefore, screws have to be dimensioned in an adequate manner and the size of the screws to be used has to be increased for ensuring a proper function. Otherwise, the life cycle of the screws is shortened and the screws may have to be exchanged more often. The exchange of screws may result in high costs, especially because screw connections may be accessible only with considerable effort within a machine.

Threads for instance have sharp notches. Sharp notches cause high fatigue in having threads. Further, sharp notches influence the load transmission through the thread in a negative manner. Consequently, a crack may occur during the lifetime of the bolt having a thread, beginning at the notch in the thread. The crack may progress and may result in total boltloss.

The connecting arrangement of the present application avoids these problems and provides an arrangement capable of reducing the notch stress. Thus, the present application provides a bolt-nut connection with improved fatigue behavior. The bolt-nut connections in the connecting arrangement and the connecting system according to embodiments described herein have a modified geometry, which helps to increase the resistance of the bolt regarding fatigue and may therefore increase the life cycle and the security of the connection compared to a screw connection as known in the art.

The terms "connecting arrangement" and "connecting system" are used synonymously in this application.

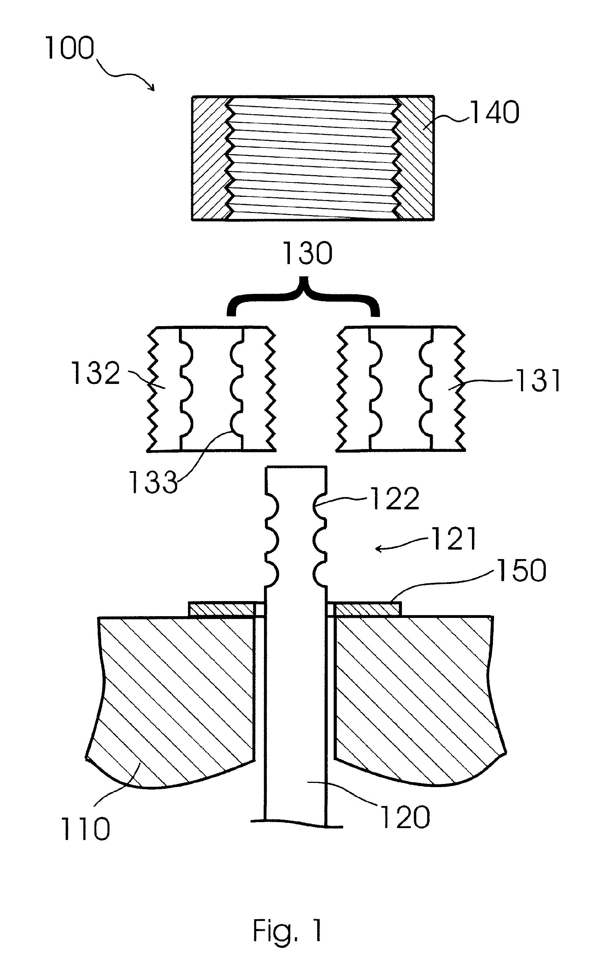

A connecting arrangement 100 according to embodiments described herein is shown in Fig. 1,. The connecting arrangement 100 includes a bolt 120. The bolt 120 is placed in a device 110, which has to be connected. A device may be a plate, a flange or the like. Typically, at least one end of the bolt 120 provides a fastening portion 121 thereat.

According to some embodiments, the fastening portion 121 may have grooves 122 with a defined geometry. Typically, these grooves 122 have a stress-relieved geometry. For instance, the grooves 122 do not have acute angles, sharp corners or the like as the sharp notches of a thread do. However, a thread contains grooves with angles sharp enough to form notches. In contrast thereto, the geometry of grooves should be understood as a recess with a substantially smooth geometry. For instance, the grooves may have the shape of a segment of a circle. According to some embodiments, the grooves 122 may have a shape, which combines different geometric figures continuously. According to some embodiments, the circumference of the grooves with grooves is continuously differentiable. Thus, the geometry of the grooves 122 is designed so that the load transmission is substantially continuous and approximately constant over the cross section of the bolt.

Typically, an improved load transmission can be described as an improvement of the load distribution over the cross section of a device. For instance, a bolt with grooves may provide an improved load transmission compared to a bolt with a thread on it, because the grooves have a smooth shape, which prevents stress peaks to appear. An improved load transmission is for instance characterized by smooth changes of the stress amount. No sharp corner, peaks or the like appear in the distribution of stress.

The improved load transmission may be provided by a stress-relieved geometry of the grooves 133 of the fastening portion 121 of bolt 120. The stress-relieved geometry may be described as a geometry, which has no abrupt changes.

Typically, the stress-relieved geometry, which causes a reduced notch stress is differentiable between at least two portions. According to some embodiments, the stress-relieved geometry is substantially continuously differentiable. Substantially continuously differentiable should be understood as being continuously differentiable in a certain range, for instance in the dimension of the groove itself. That is, small variances due to production processes or material characteristics should not be regarded as preventing the geometry of the groove from being continuously differentiable. Also, a geometry having a variation, whose size is for instance 1/20, 1/10 or even 1/5 the size of the groove should nevertheless be understood as continuously differentiable.

A stress-relieved geometry may reduce the notch stress in a bolt 120. The notch stress of the bolt 120 with stress-relieved geometry may be reduced compared to a bolt having sharp notches and dents or a geometry which is not differentiable between at least two portions.

Further, the connecting arrangement 100 provides an intermediate element 130. According to some embodiments, the intermediate element 130 has one or more convex cuts 133 on the inner side and a thread on the outer side. Typically, the convex cuts 133 of the intermediate element 130 fit with the grooves 122 of the fastening portion 121 of the bolt 120 in size and shape. A comparison between geometry of the convex cuts 133 and the thread on the outer side of intermediate element 130 shows the difference between a smooth geometry, as for instance provided by convex cuts 133 and grooves 122 and geometry having sharp edges, like threads do.

When the convex cuts 133 of the intermediate element 130 fit with the grooves 122 of the fastening portion 121 of the bolt 120, a form closure is provided. The bolt 120 is then held by the form closure between the intermediate element 130 and the grooves 122 of the bolt 120. Therefore, it is possible that the intermediate element 130 holds the bolt 120 in a defined position. According to some embodiments, the intermediate element 130 may be a clamp component, which clamps the bolt in a predetermined position.

According to some embodiments described herein, the intermediate element 130 may be divided in two parts for mounting purposes. These two parts can be seen as first part of the intermediate element 131 and second part of the intermediate element 132 in Fig. l. The two parts of the intermediate element 131, 132 can be easily mounted by surrounding the bolt 120 subsequently with the two parts 131, 132.

According to other embodiments, the intermediate element may be divided in more than two parts, for instance the intermediate element may have three, four, five, or more than five parts.

According to some embodiments, the intermediate element is made from one piece of material and is divided after the inner and the outer sides have the predetermined geometry. For instance, one piece of material gets a thread on the outer side and convex cuts on the inner side. After that, the piece of material is cut (e.g., with any convenient method or with the aid of a laser or a jet cutting method).

As can be seen in Fig. 1, a fastener 140 is provided. The fastener 140 has a thread on the inner side, which is adapted for fitting with the thread on the outer side of intermediate element 130. Further, the fastener 140 has an inner diameter, which allows the fastener 140 to fasten the intermediate element 130. For instance, the fastener 140 can fasten the two parts of the intermediate element 131 and 132. Further, a washer 150 is provided in Fig. 1 between the fastener 140 and the device 110 to be connected.

According to some embodiments, the fastener 140 may be a nut or the like. The nut is adapted for fastening the intermediate element 130 to the bolt 120 by pressing the intermediate element 130 to the fastening portion 121 of the bolt 120. Especially, the convex cuts 133 of the intermediate element 130 are pressed into the grooves 122 of the fastening portion 121 of bolt 120. In this manner, the convex cuts 133 of the intermediate element 120 and the grooves 122 of the bolt 120 may provide a form closure. The washer 150 is used to distribute the load of the fastener 140.

According to some embodiments described herein, the connecting arrangement 100 may be provided for a flange 110. Flange connections are for instance used in connecting a pipe flange, where two pipes are connected to each other. Another application of a flange connection is the connection of two beams. Typically, the connecting arrangement described herein is adapted for being used in a wind energy system.

According to some embodiments, the device 110 may be a flange. The flange may be part of a wind energy system. For instance, a flange connection may be used in a wind energy system to lock the tower of the wind energy system to the ground.

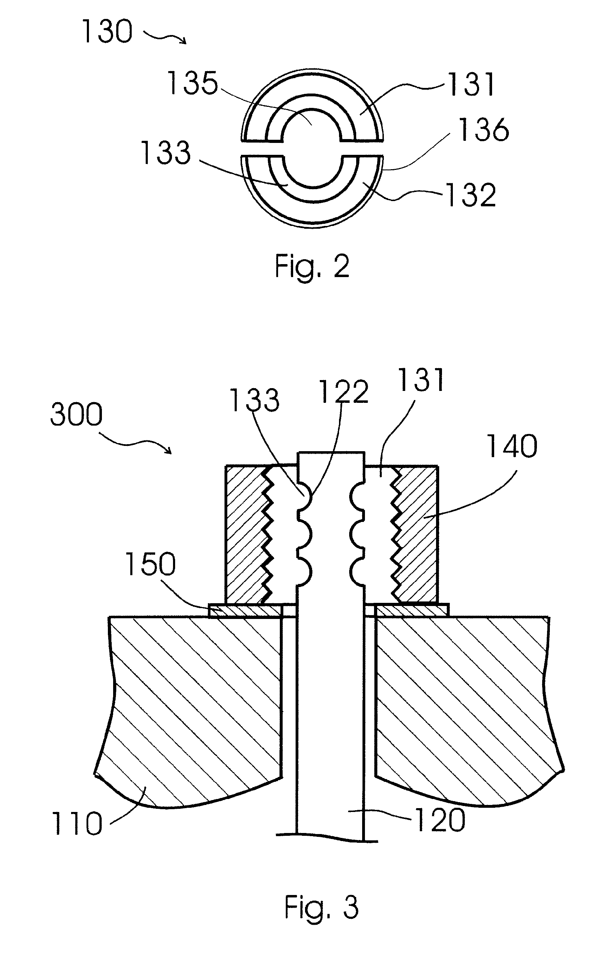

In Fig. 2, the intermediate element 130 is shown in a top view, according to some embodiments. The intermediate element 130 is divided in two parts 131 and 132 in this embodiment. Each of the parts of the intermediate elements 131, 132 are built in the same manner. The first and second part of the intermediate element 131, 132 provide an opening 135, one or more convex cuts 133, and a thread 136 on the outer side.

A connecting system 300 according to embodiments described herein is shown in Fig. 3. The connecting system 300 shows the connecting arrangement 100 of Fig. 1 in a mounted manner in a sectional view.

The bolt 120 is inserted in a component part 110, which may, for instance, be a flange. The two parts of the intermediate element 131, 132 are placed around the bolt 120 so that the convex cuts or protrusions 133 of the intermediate element 130 fit with the grooves 122 of the bolt 120. The fastener 140 surrounds the first and the second part of the intermediate element 131, 132 and the bolt 120. The fastener 140 is screwed on the intermediate element 130. By snugging down the fastener 140, the fastening portion 121 of the bolt 120 and the intermediate element 130 are connected with a predetermined strength. Further, a form closure is provided between the first and second part of the intermediate element 131, 132 and the fastener 140.

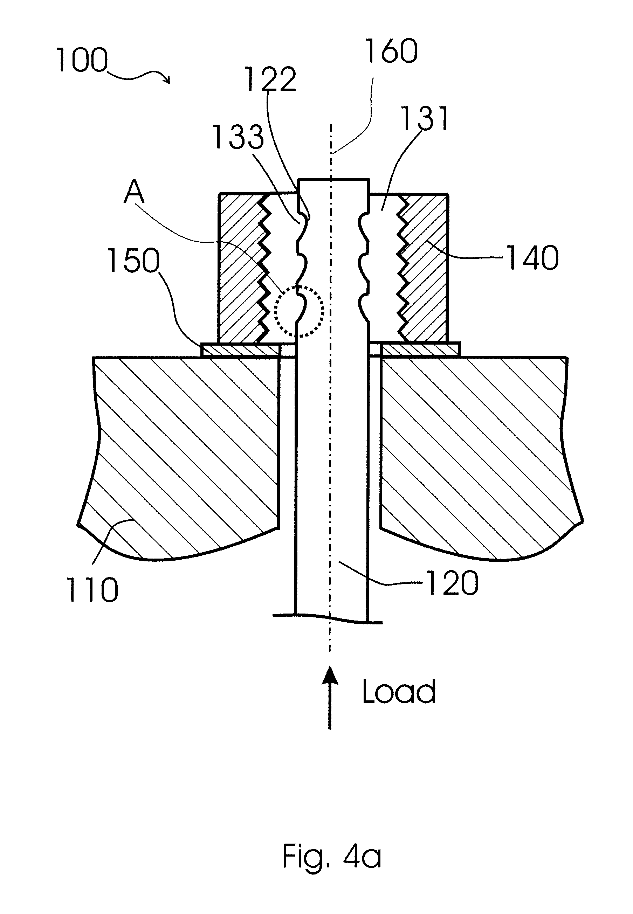

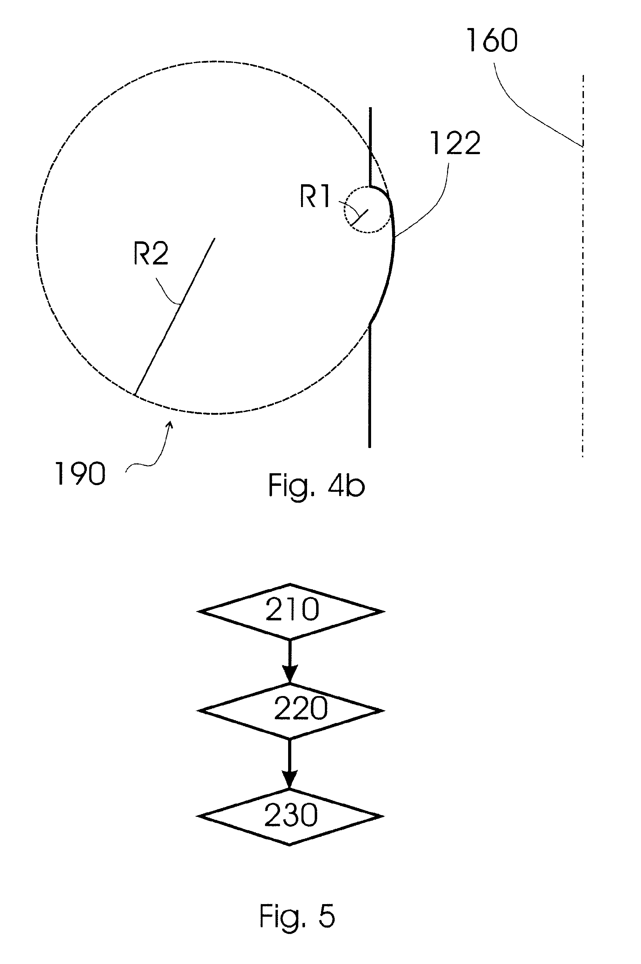

Fig. 4a shows another embodiment of the connecting system. Grooves 122 of the bolt 120 provide a modified geometry in this embodiment. The groove accentuated in Fig. 4a by dashed circle A can be seen in more detail in Fig. 4b, where an axial, sectional view of a groove 122 along centre line 160 is shown. The geometry 190 of the grooves 122 has at least two different radii as can be seen in Fig. 4b. Two radii R1 and R2 are shown in Fig. 4b, defining the geometry 190 of the stress-relieved groove 133. According to some embodiments, the two radii are connected by a smooth intersection. For instance, the radii are connected so that the geometry is substantially continuously differentiable. Radius R1 is smaller than radius R2 in the embodiment of Fig. 4b. Thereby, the geometry 190 of the grooves 122 can be adapted to the load case in order to provide an even more secure application of the connecting arrangement. For instance, the grooves may have the smaller radius in the direction, in which the load acts. When the load comes, for example, from the bolt 120 to the fastening portion 121 along the centre line 160, as shown in Fig. 4a, the greater radius comes first in that direction in order to provide a good result in connecting the device 110.

As can be seen in Fig. 4a, the construction of the intermediate element 130 is adapted for fitting with the modified geometry of the fastening portion 121 of the bolt 120. Typically, the convex cuts 133 of the intermediate element 130 have the same geometry as the grooves 122, but in an adverse manner so that the grooves 122 and the convex cuts 133 can fit with one another.

According to some embodiments, the shape of the grooves may be modified in any manner, as long as the geometry of the grooves allows for a stress-relieved transmission of the load.

According to some further embodiments, the number of grooves may be varied. The bolt is exemplarily shown with three grooves in the drawings. According to some embodiments, the number of grooves may be less or greater than three. For instance, the number of grooves may be two or just one. According to other embodiments, the number of grooves may be four, five, or even more than five.

The number of grooves and the shape of the grooves depend on the load case. The person skilled in the art will select the number and the shape of the grooves and the convex cuts dependent in order to assure a proper function and an improved fatigue behavior.

According to some embodiments, the bolt 120 may have a fastening portion at each end in order to fasten the bolt 120 in each direction. The second fastening portion at the opposed end of the bolt 120 may also have grooves with a stress-relieved geometry, as the grooves described above. Typically, the second fastening portion may have the same geometry and configuration as the first fastening portion.

According to some embodiments, a method for fastening a bolt is provided, as can be seen in Fig. 5. In one embodiment, the method includes in step 210 providing two parts to be connected, and inserting a bolt in a bore in these two parts. The bolt has a fastening portion with grooves as described above.

The fastening portion of the bolt is then surrounded by an intermediate element in step 220. The intermediate element may, for instance, be a clamp component. According to some embodiments, the intermediate element may have two or more parts so that one half of the fastening portion of the bolt is firstly surrounded by the first part of the intermediate element , and then the other half of the fastening portion is surrounded by the second part of the intermediate element. The first and the second part of the intermediate element may be the first and the second part 131, 132, as described above and may further include all embodiments described thereof.

A fastener having a thread on the inner side is provided in step 230. The fastener fits to the thread on the outer side of the intermediate element. The fastener is snugged down and is thus able to provide a form closure between the intermediate element and the fastener. By fastening the fastener, a further form closure is provided between the fastening portion of the bolt and the intermediate element. Thus, the bolt is fastened and can be held in a predetermined position. By these form closures, the parts to be connected are connected by the bolt. Thereby, the bolt is clamped by the intermediate element and tightened by the fastener. In this manner, the bolt is prevented from moving and can hold the parts to be connected together.

According to some embodiments, the method described above can be used to provide a connection, which reduces stresses due to the notch stress in a connecting arrangement. The reducing of the notch-effect may be provided by the number of grooves in the bolt or by the shape of the grooves of the bolt or by a combination thereof. The described method provides therefore a notch-stress depleted bolt by providing a method for a connecting arrangement, which prevents stress peaks in the connecting bolt.

According to some embodiments, the method may be used to fasten a flange connection. According to yet further embodiments, the method may be used in a wind energy system.

Also, the tensile-shear load combination of a thread as known in the art can be changed into a press-shear load by the method and connecting arrangement according to embodiments described herein. The connecting system described above allows for increasing the fatigue resistance. Further, the embodiments described above can use known mounting methods for mounting the connecting system. For instance, the method and the connecting system allow for using known tightening methods for fastening the fastener. Moreover, the pre-tensions, which are used to ensure a proper function of the connection, may also be calculated by known methods. Therefore, new mounting or calculation methods have not to be applied for using the above system and method.

According to some embodiments, the above construction gives the possibility to use different materials for the bolt and the thread. For example, titanium can be used instead of steel threads in case of very high loads. Thus, the dimensioning of the connecting arrangement can easily be adapted for every load case.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A connecting arrangement, comprising:
   a) a bolt including a fastening portion including one or more grooves, whose circumference is differentiable between at least two portions;
   b) an intermediate element including one or more convex cuts on the inner side of the intermediate element and a thread on the outer side of the intermediate component, wherein the one or more convex cuts are adapted for fitting with the one or more grooves of the fastening portion of the bolt; and,
   c) a fastener including a thread on the inner side, wherein the fastener is adapted for being screwed on the intermediate component.
2. The connecting arrangement according to clause 1, wherein the intermediate element is divided in at least two parts.
3. The connecting arrangement according to any preceding clause, wherein the fastener is a nut.
4. Connecting arrangement according to any preceding clause, wherein the circumference of the on or more grooves is substantially continuously differentiable.
5. The connecting arrangement according to any preceding clause, wherein each of the one or more grooves provides a geometry including at least two different radii in a cross section comprising a centre line of the bolt.
6. The connecting arrangement according to any preceding clause, wherein the one or more grooves provide a stress-relieved geometry.
7. The connecting arrangement according to any preceding clause, wherein the intermediate element and the fastening portion of the bolt are arranged to provide a form closure.
8. The connecting arrangement according to any preceding clause, wherein the connecting arrangement is a connecting device adapted for a flange connection.
9. The connecting arrangement according to any preceding clause, wherein the connecting arrangement is adapted for being used in a wind energy system.
10. Connecting system for a flange connection, comprising:
   a) a bolt including a fastening portion at one end thereof adapted for fitting with a intermediate component, wherein the fastening portion includes one or more grooves adapted for providing a stress-relieved geometry;
   b) a clamp component adapted for clamping the bolt, wherein the clamp component includes one or more protrusions on the inner side of the clamp component and a thread on the outer side of the clamp component, wherein the one or more protrusions are adapted for fitting with the one or more grooves of the fastening portion of the bolt; and,
   c) a nut including a thread on the inner side, wherein the nut is adapted for being screwed on the clamp component by fitting with the thread on the outer side of the clamp component so that a form closure between the clamp component and the fastening portion of the bolt is provided.
11. The connecting system according to any preceding clause, wherein the connecting system is adapted for fastening a flange connection in a wind energy system.
12. The connecting system according to any preceding clause, wherein each of the one or more grooves has a geometry including at least two different radii.
13. The connecting system according to any preceding clause, wherein the clamp component is divided in at least two parts.
14. The connecting system according to any preceding clause, wherein the geometry of the one or more grooves provides an improved load transmission through the bolt.
15. The connecting system according to any preceding clause, wherein the geometry of the circumference of the grooves is differentiable between at least two portions.
16. A method of fastening a bolt, comprising:
   a) providing a bolt including at least one fastening portion having one or more grooves;
   b) surrounding the bolt with a intermediate component including a thread on the outer side and one or more convex cuts on the inner side, so that the one or more convex cuts of the intermediate component fit with the one or more grooves of the bolt; and,
   c) fastening the bolt and the intermediate element with a fastener including a thread on the inner side, which fits with the thread on the outer side of the intermediate element, so that the intermediate element and the fastening portion of the bolt provide a form closure.
17. The method according to any preceding clause, wherein the method is used to fasten a flange.
18. The method according to any preceding clause, wherein a wind energy component is fastened by the provided method.
19. The method according to any preceding clause, wherein load transmission through the bolt is relieved compared to a bolt with a thread.
20. The method according to any preceding clause, wherein the form closure of the intermediate element and the fastening portion of the bolt fasten the parts to be connected.

## Claims

1. A connecting arrangement, comprising:
a) a bolt (120) including a fastening portion (121) including one or more grooves (122) whose circumference is differentiable between at least two portions;
b) an intermediate element (130) including one or more convex cuts (133) on the inner side of the intermediate element and a thread on the outer side of the intermediate component, wherein the one or more convex cuts are adapted for fitting with the one or more grooves of the fastening portion of the bolt; and
c) a fastener (140) including a thread on the inner side and being adapted for fastening the intermediate component.

2. The connecting arrangement according to claim 1, wherein the intermediate element (130) is divided in at least two parts.

3. The connecting arrangement according to any of the preceding claims, wherein the fastener (140) is a nut.

4. The connecting arrangement according to any of the preceding claims, wherein the circumference of the one or more grooves (122) is substantially continuously differentiable.

5. The connecting arrangement according to any of the preceding claims, wherein each of the one or more grooves (122) provides a geometry including at least two different radii in a cross section comprising a centre line of the bolt (120).

6. The connecting arrangement according to any of the preceding claims, wherein the intermediate element (130) and the fastening portion (121) of the bolt are arranged to provide a form closure.

7. The connecting arrangement according to any of the preceding claims, wherein the connecting arrangement is a connecting arrangement adapted for a flange connection.

8. The connecting arrangement according to any of the preceding claims, wherein the connecting arrangement is a connecting arrangement adapted for being used in a wind energy system.

9. A method of fastening a bolt, comprising:
a) providing a bolt (120) including at least one fastening portion, which includes one or more grooves (122);
b) surrounding the bolt with an intermediate component including a thread on the outer side and one or more convex cuts on the inner side so that the one or more convex cuts of the intermediate component fit with the one or more grooves of the bolt; and
c) fastening the bolt (120) and the intermediate element with a fastener having a thread on the inner side, which fits with the thread on the outer side of the intermediate element so that the intermediate element and the fastening portion of the bolt provide a form closure.

10. The method according to claim 9, wherein the notch-effect in the bolt (120) is relieved compared to a bolt with a thread.
